# EUROPEAN PATENT SPECIFICATION

(11) **EP 4 199 377 B1**
(45) Date of publication and mention of the grant of the patent: **12.11.2025**
(21) Application number: 21214450.5
(22) Date of filing: 14.12.2021
(51) Int. Cl.: H04B 10/118

(54) **CONFIGURABLE BEACON FOR THE ACQUISITION OF COVERT OPTICAL COMMUNICATION LINKS**
KONFIGURIERBARE BAKE ZUR ERFASSUNG VON VERBORGENEN OPTISCHEN KOMMUNIKATIONSVERBINDUNGEN
BALISE CONFIGURABLE POUR L'ACQUISITION DE LIAISONS DE COMMUNICATIONS OPTIQUES FURTIVES

(43) Date of publication of application: 21.06.2023
(73) Proprietor: Airbus Defence and Space GmbH, 82024 Taufkirchen (DE)
(72) Inventor: Closs, Martin, 82024 Taufkirchen (DE)
(74) Representative: Frenkel, Matthias Alexander

(56) References cited:
- WO-A1-2009/134290
- WO-A1-2018/134618
- WO-A1-2019/040484
- US-A1- 2008 118 247
- US-A1- 2008 186 553
- US-A1- 2018 038 576
- US-A1- 2020 389 232

## Description

In general, the present invention relates to a configurable light signal. More particularly, the present invention relates to an apparatus for providing a configurable light signal, to a moving or/and static object comprising such an apparatus and to a method for providing a configurable light signal.

Light signals may be specifically designed for a given purpose. For instance, beacon lights or beacon signals on aircrafts, vessels or satellites indicate the relative position and/or direction of movement to other participants and therefore contribute to a saver traffic environment. Such light signals are not designed for providing inter-aircraft, inter-vessel or inter-satellite communication.

The general process to establish an optical communications link with optical means only uses a light beacon (or, in short, just beacon) that is sent out by one of two communication partners (named partner "A" or just "A" in the following). The other partner (named partner "B" or just "B" in the following) can then passively detect the beacon, without the need to transmit a beacon of their own. Once the beacon of A has been detected, B can use it to precisely point its communication beam towards A. A can now detect the communication beam sent out by B and use this to precisely point its communications beam towards B. By this, the communications link is established and the beacon can be turned off.

Usually, the beacon itself is still quite narrow, only covering the open-loop pointing inaccuracy of A. Optical communication links are very hard to intercept or detect by third parties because the laser beam used to transfer data between communication partners is very narrow. This however imposes a dilemma when the optical link shall be established at the beginning of a communications phase: As the beam is so narrow, it must be pointed accurately towards the communication partner. This requires good knowledge of the partner's location, which is usually transmitted via a radio link. In situations where at least one communication partner wishes to remain undetected, transmitting your own location via radio is not desired. That is, such a narrow beacon will however not work if the position of B is not yet known.

As a consequence, this approach has the problem that the exact location of B has to be known. There is a need for a radio transmission to identify each other's location. This transmission can be intercepted.

An alternative to the process described above would use an omnidirectional light source as a beacon, similar to the position lights of an aircraft. Communication partner B would operate a set of cameras that cover all directions and thus detect A's "position light". With this concept, B can remain entirely passive until the optical link is established and no position information needs to be exchanged. However, as long as the "position light" is on, A can be easily detected by a third party. Furthermore, B's detection system would detect every light source that is strong enough and is thus easily jammed. The omnidirectional source can thus be easily intercepted by others.

Thus, there is a need for an improved technique for providing a light signal, e.g. a beacon signal.

From WO 2018/1346168 a holographic light detection and ranging system is known. The presented system relates to a holographic projector system and a method thereof. The system discloses a light source arranged to output light having a first characteristic. A spatial light modulator is arranged to receive the light from the light source and output spatially-modulated light in accordance with computer-generated holograms represented thereon. A holographic controller is arranged to output a plurality of holograms to the spatial light modulator. Each hologram is arranged to form a corresponding light footprint within the scene. The holographic controller is further arranged to change the position of the light footprint within the scene. A light detector is arranged to receive light having the first characteristic from the scene and output a light response signal.

From US 2008/186553 a light beam scanning system utilizing counter-rotating prism wheels is known. The System includes two counter-rotating prism wheels. Each prism wheel has a set of prisms at its periphery, selected so that prisms of equal half-angle deflections are sequentially aligned. A light transceiver structure directs a light beam parallel to the rotational axes of the prism wheels and at a distance from the rotational axes so that the light beam passes through the aligned prisms. A prism-wheel drive is operable to drive the prism wheels in opposite rotational directions.

From US 2018/038576 a configurable lightning device using a light source, an optical modulator and one or more lenses is known. The device include a light source, a first lens, one or more second lenses, and a controllable optical modulator. The first lens is coupled to receive and redirect light output from the source. The second lenses are positioned to receive the light redirected by the first lens. The controllable optical modulator is between the first and second lenses. The controllable optical modulator is coupled to receive and spatially modulate light redirected by the first lens. The one or more second lenses are coupled to receive and redirect light modulated by the controllable optical modulator. The optical modulator is selectively controllable to steer and/or shape the light redirected by the first lens to a selected distribution of the light on the one or more second lenses.

From WO 2019/040484 a light field image engine method and apparatus for generating projected 3D light fields is known. The display device includes a light engine, a spatial light modulator, one or more directable mirrors, and a projection lens. Light from the light engine is modulated by the spatial light modulator, reflected by the directable mirror(s) toward the projection lens, and projected by the projection lens (e.g. onto a screen). The directable mirror(s) may include a rotatable mirror or a digital micromirror device. The spatial light modulator may be a digital micromirror device. The spatial light modulator and the directable mirror(s) are synchronized so as to generate different modulated light patterns for different positions of the directable mirror(s). The projection of different modulated light patterns in different directions may generate different views that are visible from different user perspectives.

From US 2008/118247 A1 a method and apparatus for steering energy over a wide field of view is known. The apparatus comprises a beam steering system for directing a first beam from an optical laser source across an image plane and a wide field-of-view optical system having the image plane.

From US 2020/389232 A1 a system and method for high speed communication is known. The system comprises a laser-based system for communication and an acquisition module that is configured to acquire and characterize a plurality of laser beams.

According to a first aspect, an apparatus for providing a configurable light signal is provided. The apparatus comprises at least one light source, a spatial light modulator, a lens system and a controller device. The at least one light source, the spatial light modulator and the lens system are configured and arranged to provide a light trajectory. The light trajectory starts or begins at the at least one light source and continues to the spatial light modulator, into the lens system and out of the lens system to a search field. The controller device is configured to control the spatial light modulator. The spatial light modulator is configured to modulate light of the light trajectory spatially. In this way, the apparatus and, more particularly, the spatial light modulator provides at least on contour limited footprint of the light of the light trajectory within the search field.

The spatial light modulator may thus be configured to modulate, under control of the controller device, light of the light trajectory spatially to provide at least one contour limited footprint of the light of the light trajectory within the search field. In other words, the controller device may be configured to control the spatial light modulator such that the spatial modulator modulates light of the light trajectory spatially to provide at least one contour limited footprint of the light of the light trajectory within the search field.

The contour limited footprint may be an area or region or spot or section within the search field that is illuminated by the light. This has the advantage that the apparatus can illuminate at least one certain area (i.e. the contour limited footprint) within the search field. Thereby at least one participant or communication partner can be addressed individually.

The light signal is a beacon signal or, in short, a beacon. Thus, the configurable light signal may be a configurable beacon signal or a configurable beacon. A beacon may be an intentionally conspicuous device designed to attract attention to a specific location. The beacon signal may be the light signal provided by the device.

A search field may be considered to correspond to a/the field of view of a lens system. For example, the search field may be considered to correspond to the field of view of the lens system of the apparatus according to the first aspect. The search field may describe an imaginary dome at/onto which light can be projected. The angular extend of the dome may be determined by the field of view of the lens system.

A contour may be regarded as an outermost boundary line that encloses a footprint. A contour limited footprint may thus be considered a projected or illuminated area at or on the search field. The contour limited footprint may usually be smaller than the search field but can be extended to or even match the search field.

Modulating light may include or be redirecting light and/or changing direction of light and/or changing direction of light by refraction and/or by phase shifting light and/or reflecting light.

The at least one light source may be configured to provide light. The at least one light source and the spatial light modulator may be arranged relative to one another such that light provided by the at least one light source is incident on the spatial light modulator. The spatial light modulator may be configured to modulate, e.g. redirect and/or reflect and/or change direction, of the incident light provided by the at least one light source. At least a part or portion of the modulated, e.g. redirected light, may be directed from the spatial light modulator to the lens system. The lens system may guide the light depending on the optical properties of the lens system. The lens system may be configured to direct onto or to a search field. In this way, the lens system may illuminate a portion or section or area or spot of the search field. The contour limited footprint may thus be formed on or at or in the search field.

As mentioned above, the light signal may be a beacon signal or, in short, a beacon. The apparatus according to the first aspect may thus provide a configurable beacon signal or beacon. The direction and/or shape of the beacon (signal) can be freely chosen, to only cover directions where a communication partner is assumed to be and exclude all other directions. During a mission, the approximate direction to the communication partner may be known by the object having or carrying the apparatus according to the first aspect, even if the exact position is unknown. For instance, the object having or carrying the apparatus could know that the communication is somewhere in the southwest, e.g. flying above the object having or carrying the apparatus. The apparatus then allows illuminating only areas in the southwest above the object carrying the apparatus and excluding all other directions. In addition, the beacon (signal) can be modulated to transmit encrypted information as will be explained in more detail below. This allows secure identification and authentication of the communication partner(s), which avoids that the communication partner(s) is/are jammed.

The exact location of the communication partner does not need to be known to the apparatus or the object having or carrying the apparatus. At the same time the beacon provided by the apparatus can be limited to only the directions where the communication partner is assumed to be. This reduces the probability that the apparatus or the object having or carrying the apparatus can be detected by a third party.

It also eliminates the need for a radio transmission to identify each other's location. An optical link can therefore be established entirely under radio silence. The communication partner can remain entirely passive up to the point where the optical communication link is established. Detecting the communication partner through its communication system is therefore nearly impossible. The modulation of the beacon ensures proper authentication and authorization and avoids jamming and/or spoofing.

Thus, by way of the apparatus, interaction between communication partners is reduced to a minimum and it is kept entirely in the optical domain in order to avoid radio transmission. The security of the communication is thus significantly increased.

The controller device may be configured to control the spatial light modulator based on a direction and/or a location and/or a position of a communication partner. The direction may be an approximate direction. The direction does not have to be a precise direction. The location/position may be an approximate location/position. The location/position does not have to be a precise location/position. The direction and/or location and/or position may be information that is not transmitted from a communication partner but known to the object having or carrying the apparatus or known to the apparatus.

The spatial light modulator may be configured to modulate the light of the light trajectory spatially in such a way that at least one contour limited footprint can be steerable or changeable or the contour of the contour limited footprint can be shapeable within the search field. This is advantageous if a contour or shape of a contour limited footprint on the search field should be adjustable. Further, this is advantageous if several areas on the search field have to be illuminated differently. In this way, participants or communication partners can be addressed differently. For example, one or more participants or communication partners can be addressed or illuminated whereas others are not or are addressed or illuminated differently. Further, participants or communication partners within the contour limited footprint(s) can be dynamically addressed or illuminated.

The spatial light modulator is configured to manipulate a phase or an amplitude of incoming light of the light trajectory to provide information to an area within the at least one contour limited footprint.

The spatial light modulator may be configured to manipulate, e.g. modulate, at least one of a phase and an amplitude of the incoming light of the light trajectory. The incoming light may be the light of the light trajectory that is directed to the spatial light modulator. The incoming light may be light provided by the at least one light source e.g. in the direction of the spatial light modulator. In this way, the spatial light modulator may be configured to provide information to an area within the contour limited footprint. This area may be referred to as contour limited information footprint. In this way, a contour limited information footprint may be formed. A contour limited information footprint may be at least one area within the contour limited footprint that may experience or carry information. The area of the contour limited information footprint may usually be smaller than the contour limited footprint but can be as extended or even match the contour limited footprint.

Alternatively or additionally to manipulating at least one of the phase and the amplitude of the incoming light of the light trajectory, at least one of the at least one light source may be configured to manipulate, e.g. modulate, the phase or the amplitude of the light generated by the at least one light source. One of the at least one light source may be configured to manipulate, e.g. modulate, the light externally or internally. The spatial light modulator may be configured to modulate the light of the light trajectory spatially. In this way, at least one contour limited footprint may be formed within the search field. The light provided by the at least one light source may be modulated internally or externally. In this way, the at least one modulated light source may provide information to at least one of the contour limited footprint. In this way, another at least contour limited information footprint may be formed within the at least one contour limited footprint. The contour limited information footprint may extend to or match the contour limited footprint. The modulation (externally or internally) of the at least one light source may provide higher data rates in comparison to the spatial light modulator if the spatial light modulator modulates the light of the light trajectory other than spatially.

The apparatus may comprise at least two light sources that provide light at different wavelengths to the light trajectory. Each of the at least two light sources may be configured to modulate the light internally or externally. In this way, the light of the light trajectory may contain light of at least two different wavelengths and/or at least one different modulations schemes. Thus, the light of the light trajectory may provide information to the at least one contour limited footprint. This may form one contour limited information footprint within the at least one contour limited footprint. The contour limited information footprint may be extended to or match the contour limited footprint. In this way, the light of the light trajectory may provide information to at least one receiver within the contour limited information footprint. At least one receiver within the at least contour limited information footprint may receive the information on one wavelength. At least one receiver within the at least one contour limited information footprint may receive information on at least one wavelength.

Instead of at least two light sources with at least two different wavelengths, the at least one light source may be configured to provide light in at least two different polarizations. In this way, at least one receiver within the contour limited footprint may receive information in a polarization sensitive way. The at least two light sources may be configured to provide light in at least two different polarizations and at least one wavelength. The at least two light sources may be configured to provide light in at least two different polarizations and in at least two wavelengths. In this way, the receiver within the contour limited footprint may receive information in a wavelength and/or polarization sensitive way.

This may enable a free space optical communication with an additional illumination. This may enable a covert free space optical communication with additional illumination. The free space optical communication may be a one way optical communication. The information may encode information or messages about airspeed and heading direction. The information may encode encryption keys. This may be used as authentication and/or authorization key. In this way, A can authenticate and/or authorize against B and/or B against A. The encryption key may be used to decrypt or encrypt information that was provided by a communication link other than the configurable light signal. The encryption keys may be used to avoid jamming and/or spoofing of A and/or B from a third party. The configurable light signal/information beacon may be used as a backbone for other communication links. The configurable light signal/information beacon may be used as a side channel communication link next to (an) other communication link(s).

The spatial light modulator may be realized as an electrically-addressed spatial light modulator. The spatial light modulator may be realized as reflexive or transitive electrically-addressed spatial light modulator. In this way, the spatial light modulator can flexibly or dynamically be adapted to change or adapt the light trajectory. The electrically-addressed spatial light modulator may comprise or be configured as a digital mirror device. This ensures a reliable and/or simple implementation. The controller may comprise or be configured as a microcontroller. This ensures a reliable and/or simple implementation. The digital mirror device may be controlled by the microcontroller. The digital micro mirror device may be configured to modulate the light of the light trajectory digitally. The digital micro mirror device may be configured to modulate the light of the light trajectory digitally to achieve amplitude shift keying. In this way, digital control of the digital micro mirror device may provide faster and/or more efficient control.

The lens system comprise a relay system and a wide angle lens system. In this way, a compact lens system may be provided. The wide angle lens system may be configured to provide a field of view of at least or more than 180°. In this way, a broad search field can be provided by a compact lens system.

The relay system may comprise at least one optical device and/or a single lens and/or at least one mirror. The relay system may comprise devices that can change the polarization.

According to a second aspect, a moving object comprising the apparatus may be provided. The apparatus may be attached or mounted to the moving object. In other words, the moving object may be equipped with the apparatus or may carry the apparatus. The moving object may be a flying object such as an aircraft or a satellite. The moving object may be a non-flying object such as a vessel.

According to a third aspect, a method for providing a configurable light signal is proposed. The method may comprise providing a specific light trajectory. The light trajectory begins at the at least one light source and continues to a spatial light modulator, into a lens system and out of the lens system to a search field. The method further comprises controlling the spatial light modulator and modulating, by the spatial light modulator, the light of the light trajectory spatially. In this way, the apparatus and, more particularly, the spatial light modulator provides at least on contour limited footprint of the light within the search field.

The spatial light modulator may be configured to provide a static alignment of at least one contour limited footprint within the search field with regard to a reference coordinate system even if the at least one apparatus or the object having or carrying the apparatus changes the relative position in space.

The method may further comprise freely readjusting the shape of the contour of at least one contour limited footprint within the search field.

The method may further comprise transmitting information. The information may be transmitted steganographically. As a consequence, inter alia, steganographical communication may be provided without the possibility of unveiling the link itself nor deriving the communication functionality from the external appearance.

Further, a configurable beacon may be provided that enables to address multiple participants in a given traffic situation.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the controller device may be or comprise a processing unit that may be implemented at least partially as a computer, a logical circuit, an FPGA (Field Programmable Gate Array), a processor (for example, a microprocessor, microcontroller (µC) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

It is further clear to the person skilled in the art that even if the herein-described details will be described in terms of a method, these details may also be implemented or realized in a suitable device (e.g. the apparatus according to the first aspect or the moving object according to the second aspect), a computer processor or a memory connected to a processor, wherein the memory can be provided with one or more programs that perform the method, when executed by the processor. Further, even if some of the aspects described above have been described in reference to the apparatus according to the first aspect, these aspects may also apply to the method according to the third aspect and vice versa.

These and other aspects of the invention will now be further described, by way of example only, with reference to the accompanying figures, wherein like reference numerals refer to like parts, and in which:
- Figure 1: illustrates an embodiment of an apparatus for providing a configurable light signal;
- Figure 2: illustrates a variant of the embodiment of the apparatus of figure 1;
- Figure 3: illustrates a variant of the embodiment of the apparatus of figure 1 but with two light sources;
- Figure 3a: illustrates a variant of the embodiment of the apparatus of figure 3;
- Figure 3b: illustrates a variant of the embodiment of the apparatus of figure 3;
- Figure 3c: illustrates a variant of the embodiment of the apparatus of figure 3;
- Figure 4: illustrates an example of an object having the apparatus of any of figures 1 to 3 providing a contour limited footprint within a search field;
- Figure 5: illustrates another example of an object having the apparatus of any of figures 1 to 3 providing a contour limited footprint within the search field;
- Figure 6: illustrates transmission of information within a contour limited information footprint;
- Figures 7 to 11: illustrate examples of a configurable beacon illuminating a search field.

In the following description, for purposes of explanation and not limitation, specific details are set forth in order to provide a thorough understanding of the present disclosure. It will be apparent to one skilled in the art that the present disclosure may be practiced in other implementations that depart from the specific details. Those skilled in the art will further appreciate that functions explained herein below may be implemented using individual hardware circuitry, using software functioning in conjunction with a programmed microprocessor or a general purpose computer, using an application specific integrated circuit (ASIC) and/or using one or more digital signal processors (DSPs). It will also appreciated that when the present disclosure is described as a method, it may also be embodied in a device (e.g., the apparatus and/or moving object described herein below), a computer processor and a memory coupled to a processor, wherein the memory is encoded with one or more programs that perform the method steps disclosed herein when executed by the processor.

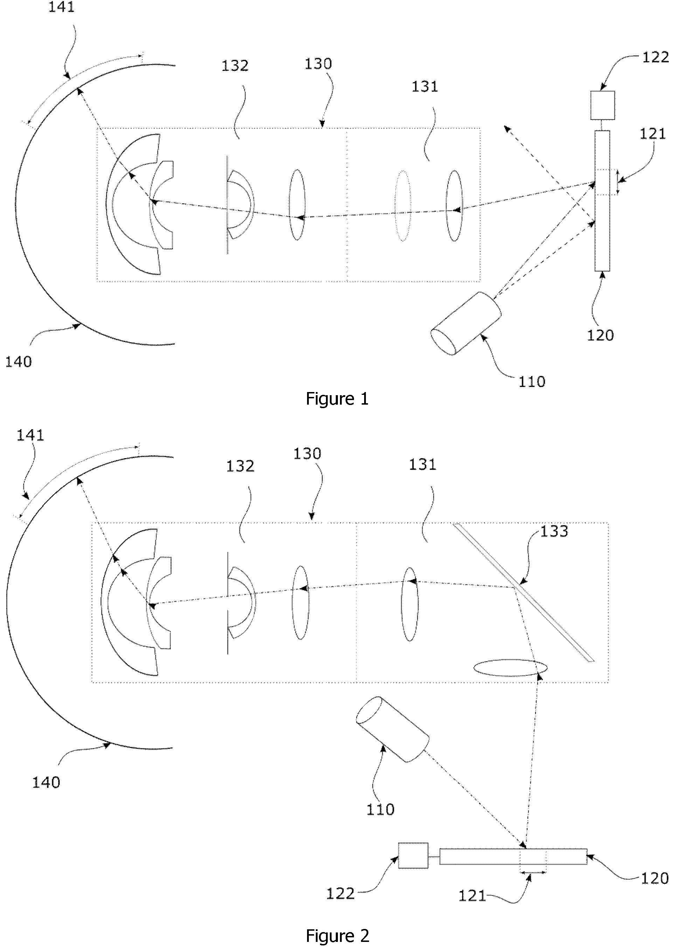

Figure 1 illustrates an example of an apparatus for providing a configurable light signal. The apparatus comprises a light source 110, a spatial light modulator 120 and a lens system 130. Further, a search field 140 is shown in figure 1. In this example, the spatial light modulator 120 may be realized as a micro mirror device, by way of example.

The light source 110, the spatial light modulator 120 and the lens system 130 are configured and arranged to provide a light trajectory from the light source 110 to the spatial light modulator 120 into the lens system 130 and out of the lens system 130 to the search field 140. The apparatus further comprises a controller device 122. The controller device 122 is configured to control the spatial light modulator 120. The controller device 122 controls the spatial light modulator 120 so that the spatial light modulator 120 is able to spatially modulate incoming light that follows the light trajectory starting from the light source 110. By modulating the incoming light spatially at the spatial light modulator 120 the light (of the light trajectory) to be reflected by the spatial light modulator 120 can be redirected into the lens system 130 or away from it as indicated by the arrows shown in figure 1 by way of example. The light trajectory that is incident on a first portion/area/section 121 of the spatial light modulator section 120 is redirected into the lens system 130. The light trajectory that is incident on portions/areas other than the first portion/area/section 121 of the spatial light modulator 120 is redirected away from the lens system 130. Redirecting may mean or include changing direction by refraction and/or by phase shifting and/or by reflection of light.

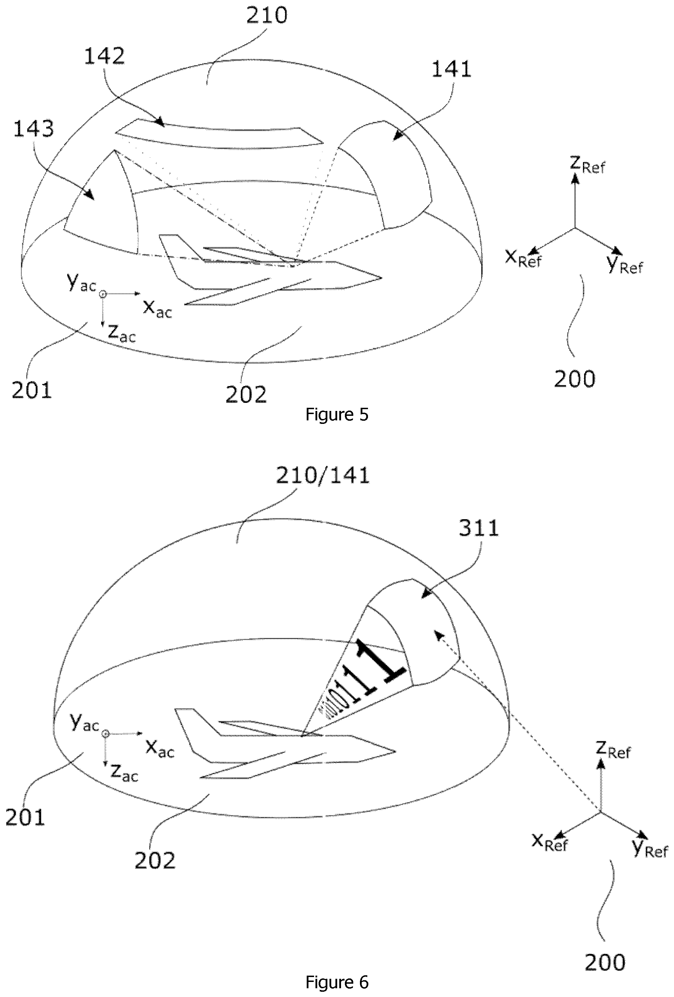

The light trajectory can be reflected and/or redirected in a number of different ways. To this end, the spatial light modulator 120 can be implemented in a number of different ways. For example, the spatial light modulator 120 may comprise or be configured as a micro mirror device. In case the spatial light modulator 120 is configured as a micro mirror device, the micro mirror device may comprise a plurality of micro mirrors / micro mirror elements. The plurality of micro mirror elements may be configured to respectively reflect the incident light so as to provide a redirection of the light trajectory. As explained, light of the light trajectory is redirected into the lens system 130 and passes a relay system 131 as well as a wide angle lens system 132. At the wide angle lens system 132 light of the light trajectory is redirected into the search field 140. In consequence, the contour limited footprint 141 results from the projection process through the lens system 130 of the illuminated spatial light modulator section 121. Areas other than the contour limited footprint 141 are not illuminated within the search field 140 by the apparatus. The contour limited footprint 141 can be steered so that it covers a different area within the search field 140. This can be performed by adjusting the section 121 of the spatial light modulator 120. In case of the spatial light modulator 120 comprising or being configured as a digital micro mirror device, this can be done by adapting or changing or adjusting the state of the respective micro mirror elements. The contour limited footprint 141 can vary in size and can vary in shape of the contour. As the spatial light modulator section 121 gets larger, the contour limited footprint 141 gets larger accordingly. The contour of the contour limited footprint 141 can be reshaped as illustrated in Fig 5 and as will be explained in further detail below. This can be performed by adjusting the section 121 of the spatial light modulator 120. In case of the spatial light modulator 120 comprising or being configured as a digital micro mirror device, this can be done by adapting or changing or adjusting the state of the respective micro mirror elements.

Figure 2 illustrates a variant of the apparatus of figure 1. The variant as shown in figure 2 comprises a different lens system 130, i.e. a lens system 130 that is different to the lens system 130 of the apparatus shown in figure 1. For example, the variant as shown in figure 2 comprises a different relay system 131, i.e. a relay system 131 that is different to the relay system 131 of the apparatus shown in figure 1. Other than that, the apparatuses of figures 1 and 2 essentially correspond to each other. According to the variant shown in figure 2, the apparatus comprises a relay system 131 with a mirror 133 and two lenses (no reference signs). This arrangement is advantageous if the spatial light modulator 120, the relay system 131 and the wide angle lens system 132 cannot be arranged in a row or can only hardly be arranged in a row. This may be due to the available space at or in aircraft, vessel, satellite or missile to or on which the apparatus shall be attached or arranged. The light trajectory is almost the same as in figure 1. However, the light trajectory within the lens system 130 is redirected differently than in figure 1. In order to achieve the desired alignment of the contour limited footprint 141 (see below for further details) the controller device 122 may control the spatial light modulator 120. For example, the controller device 122 may control the spatial light modulator to provide a different spatial light modulator section 121, i.e. a spatial light modulator section 121 different to the previous spatial light modulator section 121 from figure 1.

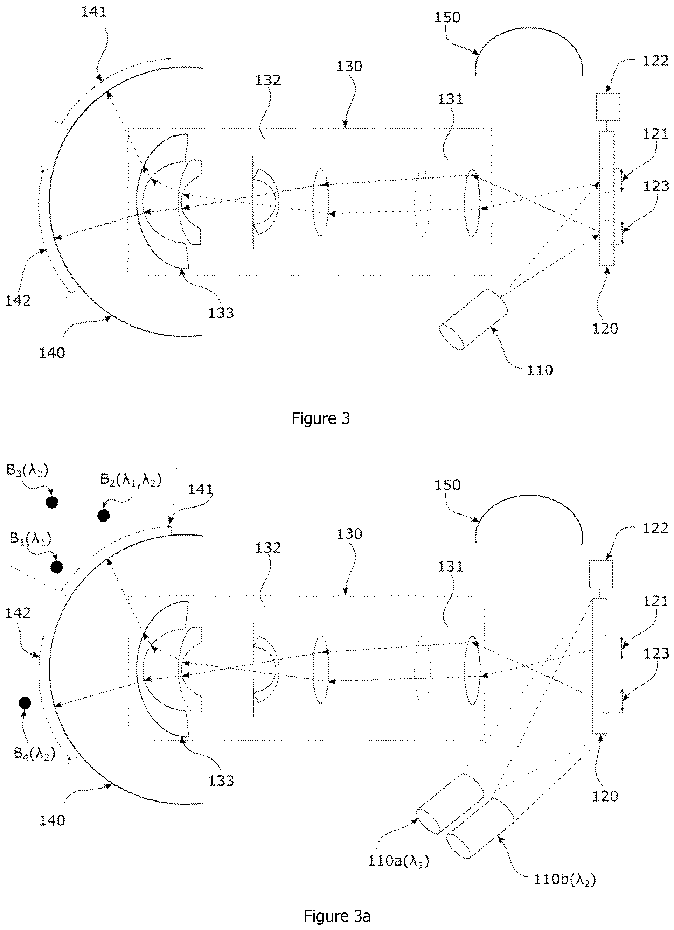

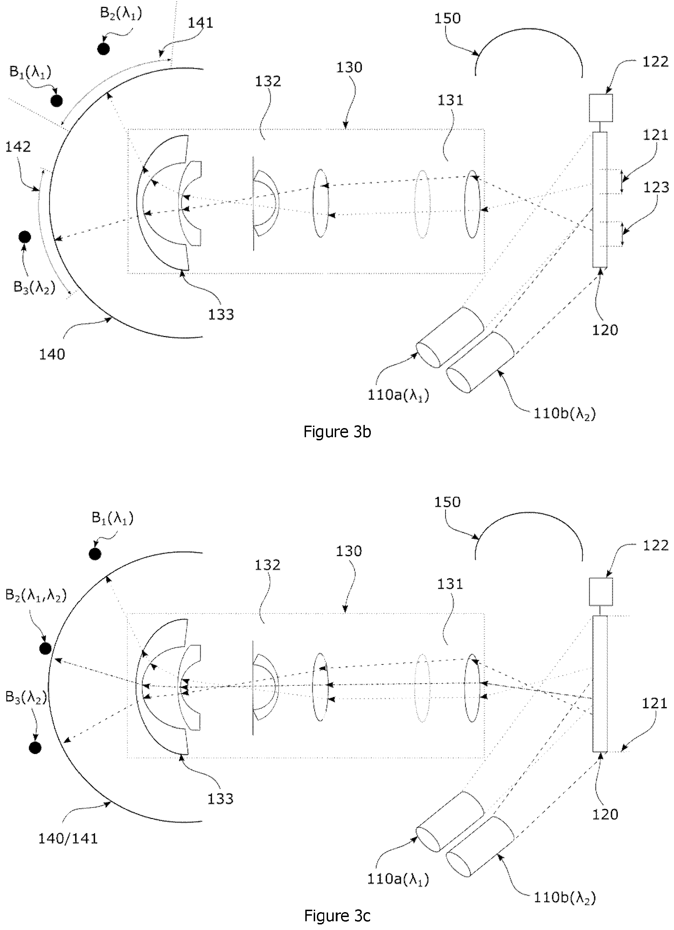

Figure 3 illustrates a variant of the apparatus shown in figure 1. In this variant, the apparatus further comprises an absorber 150. Other than that the embodiments shown in figures 1 and 3 are essentially identical. With regard to figure 3, an adjusted method is explained, namely a method to provide at least two contour limited footprints 141 and 142 by way of the apparatus shown in figure 3. This can be similarly achieved by the apparatuses shown in figures 1 and 2.

The apparatus of figure 3 comprises a light source 110, a spatial light modulator 120 and a lens system 130. Further, a search field 140 is shown in figure 3. By way of example, the spatial light modulator 120 is realized as a micro mirror device. The light source 110, the spatial light modulator 120 and the lens system 130 are configured and arranged to provide the light trajectory from the light source to the spatial light modulator 120 into the lens system 130 and out of the lens system 130 to the search field 140. The controller device 122 is configured to control the spatial light modulator 120.

In a first step, a light trajectory is provided beginning from the light source 110 to the spatial light modulator 120 into the lens system 130 and out of the lens system 130 to the search field 140. In a second step, the spatial light modulator 120 is controlled by a controller device 122. More particularly, the spatial light modulator 120 is controlled to modulate light of the light trajectory spatially to provide at least one contour limited footprint of the light within the search field 140.

By modulating the incoming light spatially at the spatial light modulator 120 the light (of the light trajectory) to be reflected by the spatial light modulator 120 can be redirected into the lens system 130 or away from it. The light trajectory that is incident on a first portion/area/section 121 of the spatial light modulator section 120 is redirected into the lens system 130. The light trajectory that is incident on a second portion/area/section 123 of the spatial light modulator section 120 is redirected into the lens system 130. The different patterned lines of the two trajectories emphasize the different light sources. The light trajectory that is incident on portions/areas other than the first portion/area/section 121 and the second portion/area/section 123 of the spatial light modulator 120 is redirected away from the lens system 130. The light that is redirected away from the lens system 130 can, for example, at least partially be directed to an absorber 150. The absorber 150 is configured to absorb the light.

The light trajectory can be reflected and/or redirected in a number of different ways. To this end, the spatial light modulator 120 can be implemented in a number of different ways. The spatial light modulator 120 may be configured as a micro mirror device. The micro mirror device may comprise a plurality of micro mirrors elements. The plurality of micro mirror elements may be configured to respectively reflect the incident light so as to provide a redirection of the light trajectory. As explained, light of the light trajectory is redirected into the lens system 130 and passes a relay system 131 as well as a wide angle lens system 132. At the wide angle lens system 132 light of the light trajectory is redirected into the search field 140. In consequence, the contour limited footprint 141 results from the projection process through the lens system 130 of the illuminated spatial light modulator section 121. Further, the contour limited footprint 142 results from the projection process through the lens system 130 of the illuminated spatial light modulator section 123. Areas other than the contour limited footprints 141, 142 are not illuminated within the search field 140 by the apparatus. The contour limited footprints 141, 142 can be steered so that they cover a different area within the search field 140. The steering can be performed by changing or adapting or adjusting the sections 121 and 123, respectively, of the spatial light modulator 120. The contour limited footprints 141, 142 can vary in size and can vary in shape of the contour. As the spatial light modulator sections 121, 123 gets larger, the contour limited footprints 141, 142 get larger, respectively. The contour of the contour limited footprints 141, 142 can be reshaped as illustrated in Fig 5 and as will be explained in further detail below. The reshaping can be performed by changing or adapting or adjusting the sections 121 and 123, respectively, of the spatial light modulator 120.

Furthermore, the contour limited footprints 141, 142 can be steered so that both contour limited footprints 141, 142 can be merged into one contour limited footprint (not shown), for example. Moreover, at least one of the contour limited footprints 141, 142 can be split up into at least two independent contour limited footprints (not shown) so as to form at least three or more contour limited footprints.

One specific implementation of the apparatus shown in figure 3 comprises a fisheye lens 133. In this way, a ray trace plot of a typical fisheye lens can be achieved. To design a configurable beacon, the apparatus may comprise the fisheye lens as a projection lens (not as imaging lens). Further, in this specific implementation, the image may be created by a digital micro mirror device (DMD) as an example for a spatial light modulator 120 and projected onto the hemisphere via the fisheye lens 133. The DMD in turn is illuminated by the light source 110. In order to send a key for identification purposes, the light source could be modulated.

As described, the apparatus of figure 3 further comprises a light absorber element 150 by way of example. That is, a potential optical layout of a configurable beacon using a DMD is shown in figure 3. The layout uses a light source 110 to illuminate the DMD and a light absorber 150 to prevent unwanted light from exiting the system. The DMD is programmed and/or controlled to reflect the light of pixels that belong to the solid angle so that the light can be directed into the fisheye lens 133. Pixels that do not belong to that solid angle are programmed to reflect the light into the absorber 150.

The light signal may be a beacon signal. Thus, the configurable light signal may be a configurable beacon signal. A beacon is usually an intentionally conspicuous device designed to attract attention to a specific location. A common example is a lighthouse, which draws attention to a fixed point that can be used to navigate around obstacles or into port. More modern examples include a variety of radio beacons that can be read on radio direction finders in all weather, and radar transponders that appear on radar displays. Beacons can also be combined with semaphoric or other indicators to provide important information, such as the status of an airport, by the colour and rotational pattern of its airport beacon, or of pending weather as indicated on a weather beacon mounted at the top of a tall building or similar site. When used in such fashion, beacons can be considered a form of optical telegraphy. Beacons help guide navigators to their destinations. Types of navigational beacons include radar reflectors, radio beacons, sonic and visual signals. Visual beacons range from small, single-pile structures to large lighthouses or light stations and can be located in the air, on land or on water. Lighted beacons are called lights; unlighted beacons are called daybeacons. Aerodrome beacons are used to indicate locations of airports and helipads. Handheld beacons are also employed in aircraft marshalling, and are used by the marshal to deliver instructions to the crew of aircraft as they move around an active airport, heliport or aircraft carrier.

Figure 3a illustrates an example in which two light sources 110a, 110b of different wavelengths λ₁, λ₂ are used. As an example, four receivers Bₘ λₙ (illustrated as dots) are within the search field 140. Light provided by each light source of the two light sources 110a, 110b may be modulated externally or internally. In this way, the two light sources 110a, 110b may provide light to the light trajectory such that the light of the light trajectory contains at least two wavelengths λ₁, λ₂ and at least one modulating scheme. This is emphasized by the two dashed lines and the two dotted lines pointing from the two light sources 110a, 110b to the spatial light modulator 120. There may result different patterns indicating different wavelengths for each of the two light sources 110a (λ₁), 110b (λ₂). The light trajectory points at/to the spatial light modulator 120 and is redirected into the lens system 130 and into/onto the search field 140. In the specific example shown in figure 3a, the total spatial light modulator area is illuminated by two light sources of two different wavelengths. The illumination area on the spatial light modulator of the at least two light sources 110a, 110b match each other and both extend as much as to the area of the spatial light modulator 120. The light of the light trajectory redirected by the spatial light modulator contains light of two wavelengths λ₁, λ₂. This is indicated by the dashed-dotted lines. The spatial light modulator 120 is configured to modulate light of the light trajectory spatially to provide two contour limited footprints 141, 142 within the search field 140. As the light trajectory contains two wavelengths, each contour limited footprint receives light of two different wavelengths λ₁, λ₂. At least one receiver within in the contour limited footprints 141,142 may receive/experience information on one of the wavelength λ₁ or λ₂. At least one of the receivers within the contour limited footprints may receive information on two wavelengths λ₁ and λ₂. Different receivers may receive information on different wavelengths. To ensure wavelength sensitive reception, the receiver may be configured to filter the light within the contour limited footprints via filtering to receive information on one wavelength. The filter may be a variable wavelength filter.

Instead of two light sources 110a, 110b with two different wavelengths λ₁, λ₂, the light sources may be configured to provide light in different polarizations. In this way, the receiver within the contour limited footprint may receive information in a polarization sensitive way/manner.

Figure 3b illustrates an example in which two light sources 110a, 110b of different wavelengths λ₁, λ₂ are used. The at least two light sources may be configured to illuminated only a part of the spatial light modulator 120. The spatial light modulator 120 may be illuminated in a way such that the illumination areas for at least two different wavelengths may intersect or may not intersect. In case the illumination areas do not intersect, the contour limited footprints 141, 142 may receive/experience information on one of the at least two wavelengths λ₁, λ₂ (as shown in figure 3b, emphasized with different patterned light trajectories). In other words, the contour limited footprint 141 receives information on wavelength λ₁ and the contour limited footprint 142 receives information on wavelength λ₂. As a consequence, the receiver within the contour limited footprints 141, 142 receive information on different wavelengths if the receiver is configured to do so.

Figure 3c illustrates an example in which the illumination areas intersect on the spatial light modulator 120 and no spatial light modulator section is on the Off-State. In order words, all light trajectories that point at/to the area of the spatial light modulator 120 are redirected into the lens system 130. If the illumination areas on the spatial light modulator 120 intersect and all the light trajectories pointing at the spatial light modulator 120 are redirected to the lens system 130, the complete search field 140 is illuminated. In this way, the search field 140 matches the contour limited footprint 141 as indicated in figure 3c. Further, the search field may divide in areas in which only one of each wavelength is receivable or both wavelengths are receivable. As indicated in figure 3c, the receiver B₁ receives light of the light trajectory that contains light of the wavelength λ₁. The receiver B₂ may receive light of the light trajectory that contains light of the wavelength λ₁ and λ₂. The receiver B₃ may receive light from the light trajectory that contains light of the wavelength λ₃.

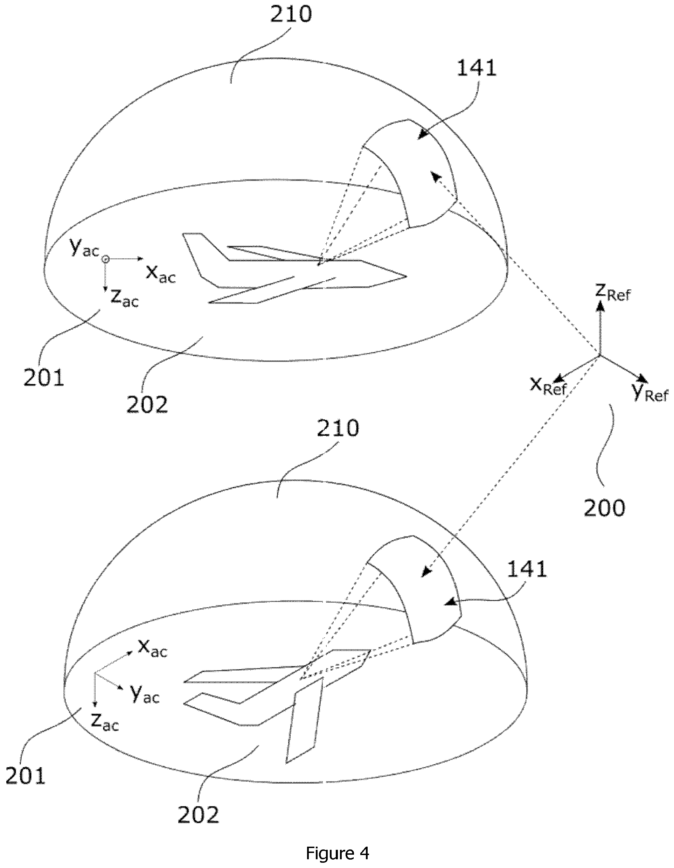

In view of the foregoing, with reference to figures 4 to 11 it is now assumed by way of example that the light signal is a beacon signal (in short, beacon). Further, by way of example, figures 4 to 11 are explained with reference to an aircraft having or carrying the apparatus. However, other moving objects like satellites, vessels or the like may likewise have or carry the apparatus.

Figure 4 illustrates static alignment of at least one contour limited footprint within a search field. More particularly, it is shown in figure 4 how the at least one contour limited footprint 141 is maintained with regard to the reference coordinate system even if the apparatus changes the/its relative position in space. Both graphics (top and bottom graphic) in Fig. 4 show the spatial representation of the search field 210 that results when the apparatus (e.g. any of the apparatuses shown in figures 1 to 3) is attached on top of an aircraft 202 and moves within the reference coordinate system 200.

The reference coordinate system 200 can be a geographical plane or another plane. In general, the pixel and field of view are configured so that the outer bound of the spatial light modulator 120 is projected into a maximum angle of the field of view of the lens system 130.

In both graphics, the aircraft 202 moves along the x_{ac} -axis with respect to the inner coordinate system 201. However, if the aircraft 202 changes the direction to be in the position shown in the lower portion of figure 4, the inner coordinate system 201 rotates accordingly and relative to the reference coordinate system 200. However, the apparatus may be configured to consider and/or to anticipate the rotation of the inner coordinate system 201 relative to the reference coordinate system 200. The apparatus may be configured to lock or maintain the relative alignment of the contour limited footprint 141 with regard to the reference coordinate system 200. This is feasible in case of pitching, rolling and/or yawing movements of the aircraft 202. In case of movements of the aircraft 202 and in case the relative alignment is maintained, the spatial light modulator 120 may modulate the light accordingly to ensure the relative alignment of the contour limited footprint 141.

As can be seen in figure 4, the search field has the shape of a semi-sphere. In order to provide a full sphere as a search field, a second apparatus can be attached at the bottom of the aircraft 202 facing into the z_{ac}-axis. In this way, a static alignment of the contour limited footprint 141 with respect to the reference coordinate system 200 may be ensured, even if the aircraft 202 performs manoeuvres.

Shadowing effects in the contour limited footprint due to parts of the aircraft, vessel, satellite or missile might be neglected. Such effects may be recognisable in a distance to the apparatus that would violate safety instructions.

As shown in the figures, instead of projecting light onto a flat screen, light is projected onto a hemisphere, for instance by using a fisheye system as a projecting lens as mentioned before. A fisheye such as the fisheye lens 133 is essentially an extreme wideangle imaging lens. To achieve the wide angle, fisheye lenses use projection functions that are different from regular lenses. Most lenses map the tangent of the image angle (i.e. the angle between the axis of the lens and a point in object space) to the radius in the image plane: r = tan(θ), where θ is the image angle, f is the focal length and r is the radius in the image plane corresponding to θ. This is called a gnomonic projection. For large angles θ, r will approach infinity, preventing wide-angle lenses that cover the entire hemisphere. Most fisheye lenses map θ directly to r: r = fθ referred to as an equidistant projection. So if θ approaches 90°, the respective point in object space is still imaged onto the camera's sensor and one can cover the entire hemisphere or even more with a single lens and sensor.

Figure 5 illustrates an example, in which the spatial light modulator 120 is configured to freely readjust the shape of the contour of at least one contour limited footprint within the search field. In the example of figure 5 three contour limited footprints 141, 142, 143 are shown by way of example to illustrate that any number of contour limited footprints with any shape within the search field 210 can be provided by the apparatus. Further, the example of figure 5 may provide the possibility of steering the contour limited footprints independently. Figure 5 illustrates the search field 210 that is referenced to the reference coordinate system 200. The aircraft 202 moves along the x_{ac}-axis of the inner coordinate system 201. The controller device 122 is configured to control the spatial light modulator 120. The controller device may control the spatial light modulator such that, by way of example, three different spatial light modulator sections are formed at the spatial light modulator 120. The three spatial light modulator sections respectively redirect the light trajectories into the lens system 130 and consequently into the search field 210. In this way, by way of example, three different contour limited footprints 141, 142, 143 appear within in the search field 210. The contour limited footprints 141, 142 and 143 are, by way of example, differently shaped and cover a different area of the search field 210. Each of the contour limited footprints 141, 142 and 143 is readjustable in shape and/or can be steered independently. This enables the illumination of different areas of the search field 210. The alignment of each, or all, or a group or subset of contour limited footprints 141, 142 and 143 can be maintained with regard to the reference coordinate system 200 or the inner coordinate system 201. The controller device may control the spatial light modulator 120 accordingly.

The spatial light modulator 120 may comprise a plurality of spatial light modulator elements. Each of the elements can be in at least two states, e.g. at least in an on and an off state. Depending on the respective state, the transmittive and/or reflective properties of the respective element may change. In this way, respective one or more sections on the spatial light modulator 120 may be formed that are needed to illuminate respective one or more areas on or within the search field 210.

A spatial light modulator (SLM) is an object that imposes some form of spatially varying modulation on a beam of light. Transparency can be controlled by a computer or controller. Usually, an SLM modulates the intensity of the light beam. However, it is also possible to produce devices that modulate the phase of the beam or both the intensity and the phase simultaneously.

The spatial light modulator 120 may be or comprise an electrically-addressed spatial light modulator (EASLM). The reflective surface of the EASLM is the functional area. As its name implies, the image on an electrically addressed spatial light modulator is created and changed electronically. The spatial light modulator 120 may be or comprise an optically-addressed spatial light modulator (OASLM).The image on an optically addressed spatial light modulator, also known as a light valve, is created and changed by shining light encoded with an image on its front or back surface. The electrically-addressed spatial light modulator may be comprise a reflective or a transitive spatial light modulator.

Figure 6 illustrates transmission of information, e.g. steganographical transmission of information. The aircraft 202 moves along the x_{ac}-axis of the inner coordinate system 201. The spatial light modulator may modulate the light of the light trajectory such that the contour limited footprint can be formed to match the whole search field 210 in alignment and extent. In other words, the apparatus may illuminate any area on the search field lying between non-existent (zero) and the whole search field 210 (, ]0, search field]). In the present case, the contour limited footprint is formed on a portion of the search field. Further, the light that moves along the light trajectory can be modulated in a way other than spatially, so that information can be transmitted within the contour limited footprint 141. In this way, a contour limited information footprint 311 may be formed.

A contour limited information footprint 311 may be at least one area within the contour limited footprint 141 that may experience or receive information. The area of the contour limited information footprint 311 may usually be smaller than the contour limited footprint 141 but can be extended to or match the contour limited footprint 141.

In order to implement the above, several realisations may be used. For example, the spatial light modulator 12 may be configured as a digital mirror device (DMD).

A DMD or DMD chip usually has on its surface a plurality of, e.g. several hundred thousand, microscopic mirrors arranged in a rectangular array which correspond to the pixels in the image to be displayed. The mirrors can be individually rotated, e.g. ±10-12°, to an on or off state. In the on state, light is reflected into the lens system making the pixel appear bright on the search field 210. In the off state, the light is directed elsewhere (e.g. into the absorber), making the pixel appear dark. To produce greyscale, the mirror is toggled on and off very quickly, and the ratio of on time to off time determines the shade produced (binary pulse-width modulation).

Two pairs of electrodes may control the position of the mirror element(s) by electrostatic attraction. Each pair may have one electrode on each side of a hinge, with one of the pairs positioned to act on a yoke and the other acting directly on the mirror element. The majority of the time, equal bias charges are applied to both sides simultaneously. Instead of flipping to a central position as one might expect, this actually holds the mirror element(s) in its current position.

The concept of a configurable beacon presented here is based on a technology that illuminates spatial light modulator such as a DMD, which acts as a pixel matrix to digitally reflect the light falling onto individual micromirrors either into the path for projection or into a light absorber. The image created by the DMD is then projected onto a screen with a lens system.

The digital mirror device may be controlled in a way that all digital mirror elements are turned on so as to reflect light. In this way, light of all light trajectories can be redirected at the digital mirror device into the lens system 130 and into the search field 210. In consequence, the contour limited footprint 141 matches the search field 210. In order to form the contour limited footprint 141 on a portion of the search field, one or more of the mirror elements may be turned off, e.g. by tilting one or more the mirrors of the spatial light modulator into an off position. As a consequence, at least a portion of the light of the light trajectory may be redirected into the lens system 130 and another portion of the light may be tilted away from the lens system 130 such as in the absorber 150. In this way, the footprint 141 shown in figure 4 or 5 may be formed.

In addition to the above, the digital mirror device may be controlled by the controller device to apply an amplitude modulation to the incoming light of the light trajectory. This may be achieved by turning one or more of the mirror elements off, e.g. by tilting one or more the mirrors of the spatial light modulator 120 such as the DMD. The switching may be performed repeatedly and/or frequently. This may result in an On-Off-Keying of the light of the light trajectories that point at the frequently redirecting mirror elements. In this way, the contour limited information footprint may experience or receive information (illustrated with a sequence of 1's and 0's in figure 6.). The frequency of tilting the micro mirrors exceed advantageously the ability of the human eye to recognize a successive change from an on to off state of the On-Off-Keying.

As explained with respect to Fig. 4 and Fig. 5 the alignment of the contour limited footprint 141 and thus of the contour limited information footprint 311 can be steered, contour reshaped and locked off regarding to the reference coordinate system 200 or to the inner coordinate system 201. Further, it is possible to split the contour limited information footprint 311 into at least two contour limited information footprints that can be steered, shaped independently and experience different information.

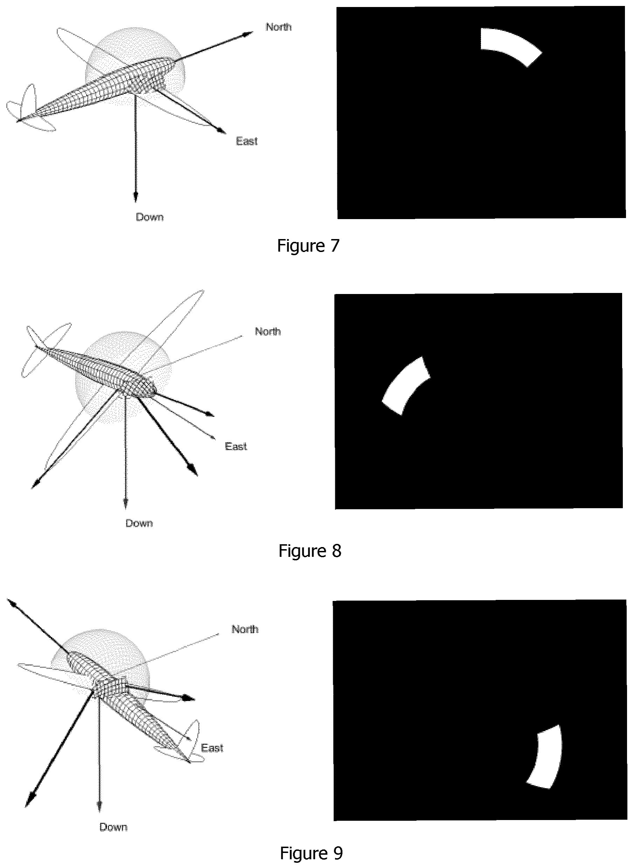

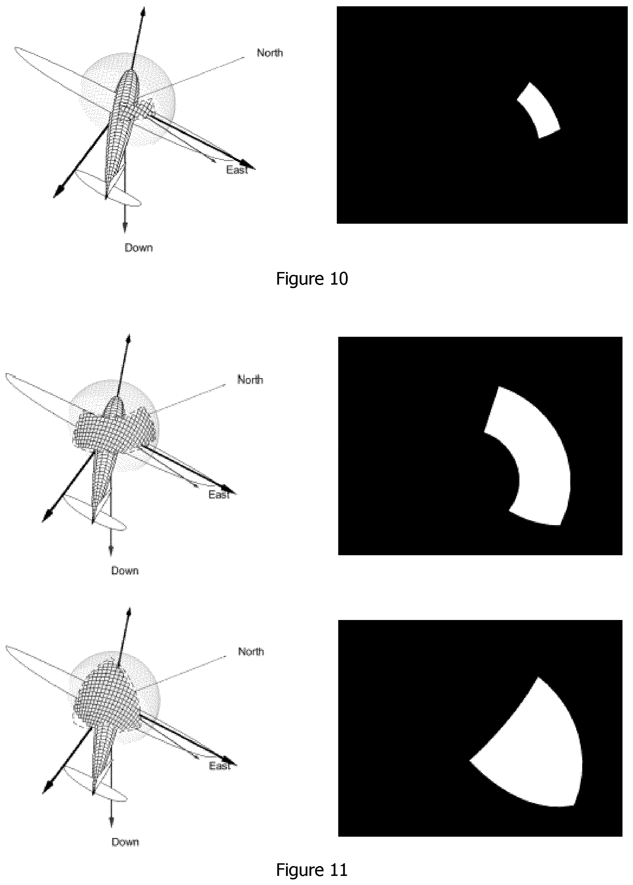

As explained, to determine which DMD pixels need to be "turned on" and which shall be "off", the search field which shall be illuminated by the configurable beacon can be projected onto the image plane of the fisheye system. When operated on an aircraft 202, the search field furthermore can be transformed from geographical coordinates (e.g. an azimuth/elevation mask in North/East/Down coordinates) to the aircraft's reference frame and then to the reference frame of the optical system of the configurable beacon. The results of such a set of transformations are shown in Figure 7 to Figure 10. Figure 7 shows an example of a configurable beacon illuminating a rectangular search field of 90°...135° azimuth and 10°...30° elevation. Figure 7 shows an aircraft flying straight and level, heading due North. Thus, figure 7 shows an aircraft at varying attitudes, while the configurable beacon illuminates a search field that covers an azimuth range from 90° to 135° and an elevation range of 10° to 30° above the horizon. Figure 8 shows the same search field illuminated as in Figure 7, aircraft pitched 10° upwards, rolling 30° to starboard and heading towards 90°. Figure 9 shows the same search field illuminated as in Figure 7, aircraft pitched 10° upwards, rolling 30° to starboard and heading towards 270°. Figure 10 shows the same search field illuminated as in Figure 7, aircraft pitched 10° upwards, rolling 30° to starboard and heading towards 315°.

The geographic North/East/Down (NED) reference frame is also shown together with aircraft axes in thick black. The meshed dome above the aircraft illustrates how the pixels of the DMD are projected onto the sphere; the pixels that are to be turned on to illuminate the search field are marked (each pixel is scaled to 20 times its actual size to make it visible). Since one fisheye lens can only cover slightly more than a hemisphere, two configurable beacons can, for example, be installed on the aircraft. The right side of the figures shows the corresponding images on the DMD that would have to be programmed to achieve the respective illumination. The images are oriented such that the forward direction of the aircraft points to the right and the starboard direction points downwards. Note how the illuminated area on the dome always stays at the same spot with respect to the reference frame, despite the pitching, rolling and yaw motion of the aircraft.

Figure 11 shows some examples of different search fields programmed into the system. Figure 11 shows the same aircraft attitude as in Figure 10, but with different search fields, namely: Top: 60°...180° azimuth and 10°...45° elevation, bottom: 90°...180° azimuth and -10°...90° elevation.

As stated above, to create a configurable beacon, one may for instance use a fisheye lens with a field of view of 200°, giving some overlap to allow for alignment of two beacons. Digital micro mirror devices can be used in varying sizes and video standards. This allows to design the configurable beacon to the system's needs, with respect to resolution and the minimum beacon width that shall be implemented.

## Claims

1. An apparatus for providing a configurable free space optical communication light signal comprising:
at least one light source (110),
a spatial light modulator (120),
a lens system (130), and
a controller device (122),
wherein the at least one light source (110), the spatial light modulator (120) and the lens system (130) are configured and arranged to provide a light trajectory beginning from the at least one light source (110) to the spatial light modulator (120) into the lens system (130) and out of the lens system (130) to a search field (140), wherein the controller device (122) is configured to control the spatial light modulator (120) and the spatial light modulator (120) is configured to modulate the light of the light trajectory spatially to provide at least one contour limited footprint (141) of the light within the search field (140), wherein the spatial light modulator (120) is configured to manipulate a phase or an amplitude of incoming light of the light trajectory to provide information to an area within the at least one contour limited footprint (141),
wherein the lens system (130) comprises a relay system (131) and a wide angle lens system (132).

2. The apparatus for a configurable light signal of claim 1,
wherein the spatial light modulator (120) is configured to modulate the light of the light trajectory spatially such that the at least one contour limited footprint (141) is steerable and/or shapeable within the search field (140).

3. The apparatus for a configurable light signal of any one of claims 1 to 2,
wherein the at least one light source (110) is configured to manipulate a phase or an amplitude of the light provided by the at least one light source (110) such that the at least one modulated light source provides information to at least one of the contour limited footprint.

4. The apparatus for a configurable light signal of any one of claims 1 to 3,
wherein the at least one light source (110) is configured as or includes at least two light sources (110) that provide light of at least two different wavelengths that follow the light trajectory to at least one receiver within the at least one contour limited footprint (141) such that the at least one receiver can receive information in a wavelength dependent way.

5. The apparatus for a configurable light signal of any one of claims 1 to 4,
wherein the spatial light modulator (120) is configured as or comprises an electrically-addressed spatial light modulator.

6. The apparatus for a configurable light signal of claim 5,
wherein the electrically-addressed spatial light modulator is configured as or comprises a digital mirror device and the controller device is configured as or comprises a microcontroller.

7. The apparatus for a configurable light signal of claim 6,
wherein the digital mirror device is configured to modulate the light of the light trajectory digitally to achieve amplitude shift keying.

8. The apparatus for a configurable light signal of claim 1,
wherein the wide angle lens system (132) is configured to provide a field of view of at least or more than 180°

9. The apparatus for a configurable light signal of claim 1 or 8,
wherein the relay system (131) comprises at least one single lens and/or at least one mirror (133).

10. A moving or static object (202) comprising the apparatus for a configurable light signal of any one of claim 1 to 9.

11. A method for providing a configurable free space optical communication light signal, the method comprising:
providing a light trajectory beginning from at least one light source (110) to a spatial light modulator (120) into a lens system (130) and out of the lens system (130) to a search field (140),
controlling, by a controller device (122), the spatial light modulator (120), and
modulating, by the spatial light modulator (120), light of the light trajectory spatially to provide at least one contour limited footprint (141) of the light within the search field (140), wherein the spatial light modulator (120) manipulates a phase or an amplitude of incoming light of the light trajectory to provide information to an area within the at least one contour limited footprint (141), wherein the lens system (130) comprises a relay system (131) and a wide angle lens system (132).

12. A method for providing a configurable free space optical communication light signal according to claim 11, the method further
comprising readjusting a shape of a contour of the at least one contour limited footprint (141) within the search field (140).

13. A method for providing a configurable free space optical communication light signal according to claim 11 or 12, the method further comprising
transmitting information using the at least one contour limited footprint (141).

## Patentansprüche

1. Eine Vorrichtung zum Bereitstellen eines konfigurierbaren freiraumoptischen Kommunikationslichtsignals, umfassend:
mindestens eine Lichtquelle (110),
einen räumlichen Lichtmodulator (120),
ein Linsensystem (130) und
eine Steuervorrichtung (122),
wobei die mindestens eine Lichtquelle (110), der räumliche Lichtmodulator (120) und das Linsensystem (130) dazu eingerichtet und angeordnet sind, eine Lichttrajektorie beginnend bei der mindestens einen Lichtquelle (110) über den räumlichen Lichtmodulator (120) in das Linsensystem (130) und aus dem Linsensystem (130) zu einem Suchfeld (140) bereitzustellen, wobei die Steuervorrichtung (122) dazu eingerichtet ist, den räumlichen Lichtmodulator (120) zu steuern, und wobei der räumliche Lichtmodulator (120) dazu eingerichtet ist, das Licht der Lichttrajektorie räumlich zu modulieren, um innerhalb des Suchfelds (140) mindestens einen konturbegrenzten Fußabdruck (141) des Lichts bereitzustellen, wobei der räumliche Lichtmodulator (120) dazu eingerichtet ist, eine Phase oder eine Amplitude des in die Lichttrajektorie eintretenden Lichts zu manipulieren, um einem Bereich innerhalb des mindestens einen konturbegrenzten Fußabdrucks (141) Informationen bereitzustellen,
wobei das Linsensystem (130) ein Relais-System (131) und ein Weitwinkel-Linsensystem (132) umfasst.

2. Die Vorrichtung zum Bereitstellen eines konfigurierbaren Lichtsignals nach Anspruch 1,
wobei der räumliche Lichtmodulator (120) dazu eingerichtet ist, das Licht der Lichttrajektorie räumlich so zu modulieren, dass der mindestens eine konturbegrenzte Fußabdruck (141) innerhalb des Suchfelds (140) lenk- und/oder formbar ist.

3. Die Vorrichtung zum Bereitstellen eines konfigurierbaren Lichtsignals nach einem der Ansprüche 1 bis 2,
wobei die mindestens eine Lichtquelle (110) dazu eingerichtet ist, eine Phase oder eine Amplitude des von der mindestens einen Lichtquelle (110) abgegebenen Lichts so zu manipulieren, dass die mindestens eine modulierte Lichtquelle Informationen an mindestens einen der konturbegrenzten Fußabdrücke bereitstellt.

4. Die Vorrichtung zum Bereitstellen eines konfigurierbaren Lichtsignals nach einem der Ansprüche 1 bis 3,
wobei die mindestens eine Lichtquelle (110) als oder mit mindestens zwei Lichtquellen (110) ausgebildet ist, die Licht mit mindestens zwei unterschiedlichen Wellenlängen bereitstellen, das der Lichttrajektorie zu mindestens einem Empfänger innerhalb des mindestens einen konturbegrenzten Fußabdrucks (141) folgt, sodass der mindestens eine Empfänger Informationen wellenlängenabhängig empfangen kann.

5. Die Vorrichtung zum Bereitstellen eines konfigurierbaren Lichtsignals nach einem der Ansprüche 1 bis 4,
wobei der räumliche Lichtmodulator (120) als oder mit einem elektrisch adressierten räumlichen Lichtmodulator ausgebildet ist.

6. Die Vorrichtung zum Bereitstellen eines konfigurierbaren Lichtsignals nach Anspruch 5,
wobei der elektrisch adressierte räumliche Lichtmodulator als oder mit einem digitalen Spiegel-Bauteil ausgebildet ist und die Steuervorrichtung als oder mit einem Mikrocontroller ausgebildet ist.

7. Die Vorrichtung zum Bereitstellen eines konfigurierbaren Lichtsignals nach Anspruch 6,
wobei das digitale Spiegel-Bauteil dazu eingerichtet ist, das Licht der Lichttrajektorie digital zu modulieren, um Amplituden-Shift-Keying zu erreichen.

8. Die Vorrichtung zum Bereitstellen eines konfigurierbaren Lichtsignals nach Anspruch 1,
wobei das Weitwinkel-Linsensystem (132) dazu eingerichtet ist, ein Sichtfeld von mindestens oder mehr als 180° bereitzustellen.

9. Die Vorrichtung zum Bereitstellen eines konfigurierbaren Lichtsignals nach Anspruch 1 oder 8,
wobei das Relais-System (131) mindestens eine Einzellinse und/oder mindestens einen Spiegel (133) umfasst.

10. Ein bewegtes oder statisches Objekt (202), umfassend die Vorrichtung zum Bereitstellen eines konfigurierbaren Lichtsignals nach einem der Ansprüche 1 bis 9.

11. Verfahren zum Bereitstellen eines konfigurierbaren freiraumoptischen Kommunikationslichtsignals, wobei das Verfahren umfasst:
Bereitstellen einer Lichttrajektorie beginnend von mindestens einer Lichtquelle (110) zu einem räumlichen Lichtmodulator (120) in ein Linsensystem (130) und aus dem Linsensystem (130) zu einem Suchfeld (140),
Steuern, durch eine Steuervorrichtung (122), des räumlichen Lichtmodulators (120), und
räumliches Modulieren, durch den räumlichen Lichtmodulator (120), von Licht der Lichttrajektorie, um innerhalb des Suchfelds (140) mindestens einen konturbegrenzten Fußabdruck (141) des Lichts bereitzustellen, wobei der räumliche Lichtmodulator (120) eine Phase oder eine Amplitude des in die Lichttrajektorie eintretenden Lichts manipuliert, um einem Bereich innerhalb des mindestens einen konturbegrenzten Fußabdrucks (141) Informationen bereitzustellen, wobei das Linsensystem (130) ein Relais-System (131) und ein Weitwinkel-Linsensystem (132) umfasst.

12. Verfahren zum Bereitstellen eines konfigurierbaren freiraumoptischen Kommunikationslichtsignals nach Anspruch 11, wobei das Verfahren ferner Neuanpassen einer Konturform des mindestens einen konturbegrenzten Fußabdrucks (141) innerhalb des Suchfelds (140) umfasst.

13. Verfahren zum Bereitstellen eines konfigurierbaren freiraumoptischen Kommunikationslichtsignals nach Anspruch 11 oder 12, wobei das Verfahren ferner Senden von Informationen mittels des mindestens einen konturbegrenzten Fußabdrucks (141) umfasst.

## Revendications

1. Appareil destiné à fournir un signal lumineux de communication par voie optique dans l'espace libre pouvant être configuré comprenant:
au moins une source lumineuse (110),
un modulateur spatial de lumière (120),
un système de lentilles (130), et
un organe de commande (122),
dans lequel l'au moins une source lumineuse (110), le modulateur spatial de lumière (120) et le système de lentilles (130) sont conçus et agencés pour fournir une trajectoire lumineuse partant de l'au moins une source lumineuse (110) vers le modulateur spatial de lumière (120) dans le système de lentilles (130) et sortant du système de lentilles (130) vers un champ de recherche (140), dans lequel l'organe de commande (122) est conçu pour commander le modulateur spatial de lumière (120) et le modulateur spatial de lumière (120) est conçu pour moduler spatialement la lumière de la trajectoire lumineuse afin de fournir au moins une empreinte limitée par le contour (141) de la lumière dans le champ de recherche (140), dans lequel le modulateur spatial de lumière (120) est conçu pour manipuler une phase ou une amplitude de la lumière entrante de la trajectoire lumineuse afin de fournir des informations à une zone située dans l'au moins une empreinte limitée par le contour (141),
dans lequel le système de lentilles (130) comprend un système de relais (131) et un système de lentilles grand angle (132).

2. Appareil pour un signal lumineux pouvant être configuré selon la revendication 1,
le modulateur spatial de lumière (120) est conçu pour moduler la lumière de la trajectoire lumineuse dans l'espace de manière à ce que l'au moins une empreinte limitée par le contour (141) soit orientable et/ou façonnable à l'intérieur du champ de recherche (140).

3. Appareil pour un signal lumineux pouvant être configuré selon l'une quelconque des revendications 1 à 2,
dans lequel l'au moins une source lumineuse (110) est conçue pour manipuler une phase ou une amplitude de la lumière fournie par l'au moins une source lumineuse (110) de manière à ce que l'au moins une source lumineuse modulée fournisse des informations à l'au moins une empreinte limitée par le contour.

4. Appareil pour un signal lumineux pouvant être configuré selon l'une quelconque des revendications 1 à 3,
dans lequel l'au moins une source lumineuse (110) est conçue comme ou comprend au moins deux sources lumineuses (110) qui fournissent une lumière d'au moins deux longueurs d'onde différentes qui suivent la trajectoire de la lumière vers au moins un récepteur à l'intérieur de l'au moins une empreinte limitée par un contour (141) de sorte que l'au moins un récepteur puisse recevoir des informations en fonction de la longueur d'onde.

5. Appareil pour un signal lumineux pouvant être configuré selon l'une quelconque des revendications 1 à 4,
dans lequel le modulateur spatial de lumière (120) est conçu comme ou comprend un modulateur spatial de lumière à adressage électrique.

6. Appareil pour un signal lumineux pouvant être configuré selon la revendication 5,
dans lequel le modulateur spatial de lumière à adresse électrique est conçu comme ou comprend un dispositif à miroir numérique et le contrôleur est configuré comme ou comprend un microcontrôleur.

7. Appareil pour un signal lumineux pouvant être configuré selon la revendication 6,
dans lequel le dispositif à miroir numérique est conçu pour moduler numériquement la lumière de la trajectoire lumineuse afin d'obtenir une modulation par déplacement d'amplitude.

8. Appareil pour un signal lumineux pouvant être configuré selon la revendication 1,
dans lequel le système de lentilles grand angle (132) est conçu pour fournir un champ de vision d'au moins ou de plus de 180°.

9. Appareil pour un signal lumineux pouvant être configuré selon la revendication 1 ou 8,
dans lequel le système de relais (131) comprend au moins une lentille unique et/ou au moins un miroir (133).

10. Object mobile ou statique (202) comprenant l'appareil pour un signal lumineux pouvant être configuré selon l'une quelconque des revendications 1 à 9.

11. Procédé de fourniture d'un signal lumineux de communication par voie optique dans l'espace libre pouvant être configuré, le procédé comprenant:
la fourniture d'une trajectoire lumineuse partant d'au moins une source lumineuse (110) vers un modulateur spatial de lumière (120) dans un système de lentilles (130) et sortant du système de lentilles (130) vers un champ de recherche (140),
la commande, par un contrôleur (122), du modulateur spatial de lumière (120), et
la modulation, par le modulateur spatial de lumière (120), de la lumière de la trajectoire lumineuse dans l'espace pour fournir au moins une empreinte limitée par le contour (141) de la lumière dans le champ de recherche (140), dans lequel le modulateur spatial de lumière (120) manipule une phase ou une amplitude de la lumière entrante de la trajectoire lumineuse pour fournir des informations à une zone située dans l'au moins une empreinte limitée par le contour (141), dans lequel le système de lentilles (130) comprend un système de relais (131) et un système de lentilles grand angle (132).

12. Procédé pour un signal lumineux de communication par voie optique dans l'espace libre pouvant être configuré selon la revendication 11, le procédé comprenant en outre le réajustement de la forme d'un contour de l'au moins une empreinte limitée par le contour (141) dans le champ de recherche (140).

13. Procédé pour un signal lumineux de communication par voie optique dans l'espace libre pouvant être configuré selon la revendication 11 ou 12, le procédé comprenant en outre
la transmission d'informations à l'aide de l'au moins une empreinte limitée par le contour (141).
